# EUROPÄISCHE PATENTSCHRIFT

(11) **EP 2 828 061 B1**
(45) Veröffentlichungstag und Bekanntmachung des Hinweises auf die Patenterteilung: **20.04.2016**
(21) Anmeldenummer: 13705979.6
(22) Anmeldetag: 18.02.2013
(51) Int. Cl.: B29C 51/22, B29C 51/36, B29C 51/10, B29C 51/42, B29C 51/44, B29C 51/16, B29C 51/20

(54) **THERMOFORMEINRICHTUNG**
THERMOFORMING APPARATUS
APPAREIL DE THERMOFORMAGE

(30) Priorität: 21.03.2012 DE 102012204511
(43) Veröffentlichungstag der Anmeldung: 28.01.2015
(73) Patentinhaber: Robert Bosch GmbH, 70442 Stuttgart (DE)
(72) Erfinder: KLOEPPEL, Holger, 63683 Ortenberg (DE); BECK, Martin, 73655 Pluederhausen (DE); BIRKNER, Michael, 35586 Wetzlar (DE); WALTER, Peter, 63683 Ortenberg (DE)
(86) Internationale Anmeldenummer: PCT/EP2013/053206
(87) Internationale Veröffentlichungsnummer: WO 2013/139544

(56) Entgegenhaltungen:
- EP-A2- 0 158 275
- DE-U1- 9 108 344
- US-A1- 2009 104 302

## Beschreibung

### Stand der Technik

Die Erfindung betrifft eine Thermoformeinrichtung, insbesondere für mit einem Lebensmittel befüllbare Becher, nach dem Oberbegriff des Anspruchs 1.

Mittels einer derartigen, aus der Praxis bekannten Thermoformeinrichtung werden in eine erwärmte Folienbahn gleichzeitig mehrere nebeneinander angeordnete Becher eingeformt, die anschließend mit einem Lebensmittel, wie Joghurt oder ähnlichem befüllt werden. Die befüllten Becher werden dann mit einer Deckelfolie (beispielsweise aus Aluminium bestehend) versiegelt und aus der Folienbahn werden zuletzt einzelne oder mehrere miteinander verbundene Becher ausgestanzt.

Zum Einformen der Becher in die Folienbahn weist die bekannte Thermoformeinrichtung ein Formwerkzeug mit einer Tiefziehform auf, die für jeden Becher eine Öffnung mit einer innenliegenden Umfangswand und einen sich an die Umfangswand anschließenden Bodenbereich aufweist. Die Umfangswand sowie der Bodenbereich bilden dabei die Form des in die Folienbahn eingeformten Bechers aus. Weiterhin besteht die Tiefziehform aus einem in Bezug einem Oberteil der Thermoformeinrichtung feststehenden ersten Teilelement, das mit einem höhenverstellbaren, stempelartigen zweiten Element (für jede Öffnung) zusammenwirkt. Durch das höhenverstellbare zweite Element lassen sich verschiedene Becherhöhen realisieren. Wesentlich dabei ist, dass das erste Element stets in Überdeckung mit dem Oberteil der Thermoformeinrichtung bzw. mit der Folienbahn angeordnet ist, so dass die Zugänglichkeit zu den Öffnungen der ersten Einrichtung erschwert ist. Darüber hinaus gibt es Anwendungsfälle, bei denen auf die Außenseiten der Becher Etiketten angebracht werden sollen, wobei dies bereits vor dem Ausformen der Becher, das heißt im Bereich der Thermoformeinrichtung erfolgen soll ("In-Mould-Etikettieren"). Die dazu erforderliche Zuführeinrichtung benötigt im Bereich des ersten Teilelements relativ viel Bauraum, so Austauschseite 2

dass dies aufgrund der beschriebenen Anordnung der beiden Teilelemente an der Thermoformeinrichtung in der Praxis oftmals schwierig zu realisieren ist. Nachteilig ist zudem, dass aufgrund der Arbeitsabläufe, bei denen zunächst die Etiketten in die Öffnungen des ersten Teilelements eingeführt werden müssen, und erst danach das Einformen der Behälter erfolgen kann, die bekannten Thermoformeinrichtung eine relativ geringe Leistung aufweisen.

Eine entsprechende Vorrichtung ist beispielsweise aus der nachveröffentlichten WO 2013/041272 A1 bekannt.

Aus der EP 158275 A2 sind bereits ein Verfahren und eine Vorrichtung zur Herstellung eines wannenförmigen Formkörpers aus Kunststoff bekannt. Bei dem wird eine an ihrem Rand eingespannte Kunststoffplatte erwärmt und anschließend an die Oberfläche einer Tiefziehform angesaugt.

### Offenbarung der Erfindung

Ausgehend von dem dargestellten Stand der Technik liegt der Erfindung die Aufgabe zugrunde, eine Thermoformeinrichtung, insbesondere für mit einem Lebensmittel befüllbare Becher, nach dem Oberbegriff des Anspruchs 1 derart weiterzubilden, dass eine im Bereich der Tiefziehform gut zugängliche und einfach ausgebildete Thermoformeinrichtung geschaffen wird, die es ermöglicht, Zusatzeinrichtungen, die mit dem ersten Teilelement zusammenwirken, insbesondere eine Etikettenzuführeinrichtung, besonders einfach außerhalb der Tiefziehform anzuordnen. Diese Aufgabe wird erfindungsgemäß bei einer Thermoformeinrichtung mit den Merkmalen des Anspruchs 1 dadurch gelöst, dass die Tiefziehform aus wenigstens zwei ersten Teilelementen und aus einem zweiten Teilelement besteht, und dass die wenigstens zwei ersten Teilelemente in eine Position verstellbar angeordnet sind, in der diese außer Deckung außerhalb des Oberteils und dem zweiten Teilelement angeordnet sind, wobei das zweite Teilelement stets ortsfest in Überdeckung mit dem Oberteil angeordnet ist.

### Austauschseite 2a

Vorteilhafte Weiterbildungen der erfindungsgemäßen Thermoformeinrichtung sind in den Unteransprüchen aufgeführt. In den Rahmen der Erfindung fallen sämtliche Kombinationen aus zumindest zwei von in den Ansprüchen, der Beschreibung und/oder den Figuren offenbarten Merkmalen.

Besonders bevorzugt ist der Einsatz der Erfindung bei einer Thermoformeinrichtung, bei der eine Einrichtung zum Zuführen von Etiketten in die Durchgangsöffnung des ersten Teilelements vorgesehen ist, und dass die Einrichtung in Wirkverbindung mit einem ersten Teilelement angeordnet ist, wenn ein anderes erstes Teilelement in Wirkverbindung mit dem zweiten Teilelement angeordnet ist. Bei einer derartigen Ausbildung lässt sich eine besonders hohe Leistung erzielen, da es möglich ist, mittels der Einrichtung an dem einen Teilelement Etiketten zuzuführen, während das andere Teilelement bereits mit den Etiketten bestückt und in Wirkverbindung mit dem Oberteil angeordnet ist. Mit anderen Worten gesagt bedeutet dies, dass in einer Stillstandphase des Trägers gleichzeitig an beiden ersten Teilelementen Arbeitsgänge erfolgen können.

Ein konstruktiv relativ einfacher Aufbau zur Verstellung der Teilelemente wird erzielt, wenn die Tiefziehform zwei erste Teilelemente umfasst, die an einem säulenartigen Träger um eine Achse drehbar angeordnet sind, und dass die zwei ersten Teilelemente um 180° zueinander angeordnet sind.

Das zweite Teilelement der Tiefziehform muss zum Einformen der Becher in eine definierte (Höhen-) Position in das erste Teilelement eingefahren werden. Um dieses Erfordernis mit relativ geringem vorrichtungstechnischem Aufwand zu realisieren, ist es in einer weiteren konstruktiv bevorzugten Ausgestaltung der Erfindung vorgesehen, dass der Antrieb des zweiten Teilelements mittels eines Hubspindelantriebs erfolgt.

Weiterhin kann es vorgesehen sein, dass zum Einfacheren Entformen und für den Weitertransport der Becher mit dem entsprechenden Folienbahnabschnitt das erste Teilelement zusätzlich höhenverstellbar angeordnet ist.

Um ohne eine zusätzliche Einrichtung ein relativ einfaches Entformen der Becher aus der Tiefziehform zu ermöglichen, wird es darüber hinaus vorgeschlagen, dass zum Entformen der Becher aus dem ersten Teilelement das zweite Teilelement mit seiner Grundfläche über die Position zum Einformen des Bodenbereichs hinaus in Richtung des Oberteils in das erste Teilelement einfahrbar ist.

In bevorzugter geometrischer Ausbildung der Tiefziehform wird vorgeschlagen, dass die Umfangswand der Durchgangsöffnung im ersten Teilelement zumindest im Einführbereich des zweiten Teilelements in das erste Teilelement sowie das zweite Teilelement im entsprechenden Bereich jeweils mit geraden Seitenwänden, das heißt ohne Einführschrägen, ausgebildet ist.

Zur Reduzierung der Taktzeiten und somit zur Leistungserhöhung der Thermoformeinrichtung wird darüber hinaus vorgeschlagen, dass zumindest die Grundfläche des zweiten Teilelements als gekühlte Grundfläche ausgebildet ist. Dadurch findet eine rasche Abkühlung der erwärmten Folienbahn nach dem Einformen des Bechers bzw. ein Erstarren der Folienbahn im Bodenbereich des Bechers statt. Dadurch lassen sich die Becher rasch entformen.

Weitere Merkmale, Vorteile und Einzelheiten der Erfindung ergeben sich aus der nachfolgenden Beschreibung bevorzugter Ausführungsbeispiele sowie anhand der Zeichnung.

### Diese zeigt in:

- Fig. 1: in vereinfachter Darstellung eine erfindungsgemäße Thermoformeinrichtung für Becher in Seitenansicht,
- Fig. 2: einen Teilbereich einer Tiefziehform mit einem in die Durchgangsöffnung der Tiefziehform einfahrbaren, stempelartigen zweiten Teilelement in verschiedenen Höhenpositionen im Längsschnitt und
- Fig. 3 bis Fig. 5: die Thermoformeinrichtung gemäß Fig. 1 in gegenüber Fig. 1 nochmals vereinfachter Darstellung zur Erläuterung verschiedener Arbeitsstellungen der Thermoformeinrichtung, jeweils im Längsschnitt.

Gleiche Bauteile bzw. Bauteile mit gleicher Funktion sind in den Figuren mit den gleichen Bezugziffern versehen.

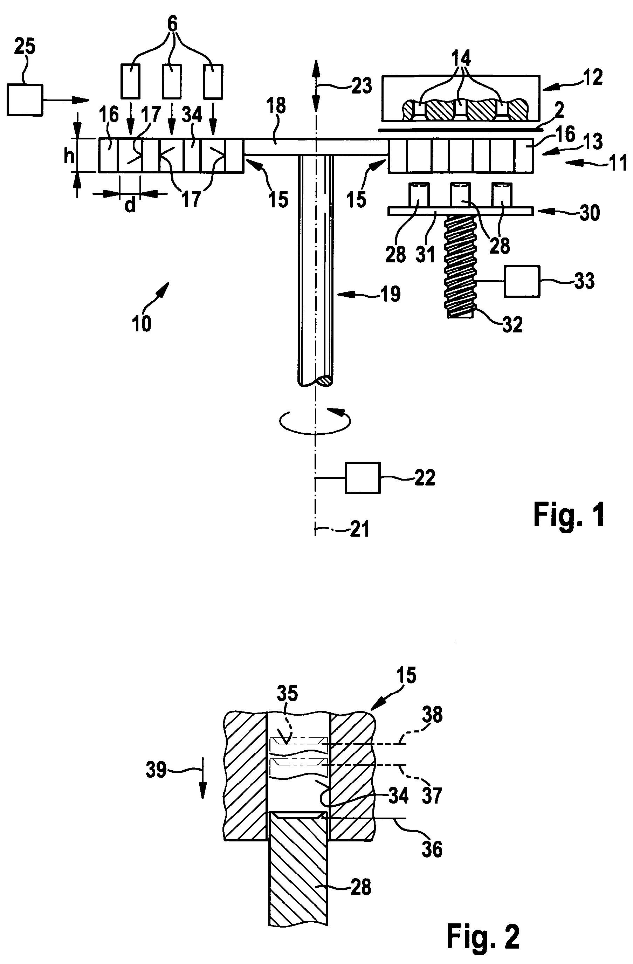

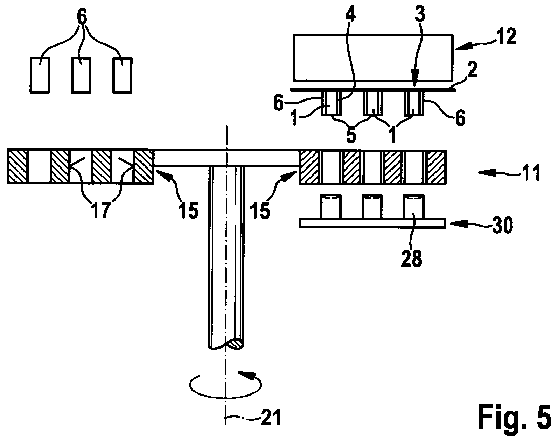

In der Fig. 1 ist vereinfacht eine erfindungsgemäße Thermoformeinrichtung 10, insbesondere für mit einem Lebensmittel befüllbare Becher 1 dargestellt. Die Becher 1 werden mittels der Thermoformeinrichtung 10 in eine erwärmte (Kunststoff-) Folienbahn 2 eingeformt, und nach Verlassen der Thermoformeinrichtung 10 mit dem Lebensmittel, beispielsweise mit Joghurt, befüllt. Zuletzt werden die Becher 1 mit einer beispielsweise aus Aluminium bestehenden Deckelfolie an ihrer Oberseite dicht verschlossen. Die Becher 1 weisen, wie anhand der Fig. 5 erkennbar ist, einen Öffnungsbereich 3, eine umlaufende Seitenwand 4 sowie auf der dem Öffnungsbereich 3 gegenüberliegenden Seite einen Bodenbereich 5 auf.

Die Thermoformeinrichtung 10 umfasst ein Formwerkzeug 11, das ein Oberteil 12 sowie eine unterhalb des Oberteils 12 angeordnete Tiefziehform 13 aufweist. Die Folienbahn 2 ist innerhalb der Thermoformeinrichtung10 zwischen dem Oberteil 12 und dem Formwerkzeug 11 angeordnet. Insbesondere weist das Oberteil 12 eine (nicht dargestellte) Heizeinrichtung zum Erwärmen der Folienbahn 2 sowie auf der der Folienbahn 2 zugewandten Seite angeordnete, düsenartige Auslässe 14 auf, die mit einer ebenfalls nicht dargestellten Überdruckquelle verbunden sind, und die dazu dienen, die erwärmte Folienbahn 2 in Wirkverbindung mit der Tiefziehform 13 zu bringen.

Die Tiefziehform 13 besteht aus wenigstens zwei, vorzugsweise aus genau zwei ersten Teilelementen 15, die identisch ausgebildet sind. Die ersten Teilelemente 15 sind als Tiefziehplatte 16 mit jeweils mehreren gleich ausgebildeten Durchgangsöffnungen 17 ausgebildet. Die beiden Tiefziehplatten 16 sind an einem Arm 18 eines säulenartigen Trägers 19 in gleichem Abstand zu einer Drehachse 21 angeordnet. Der Träger 19 ist mittels eines ersten Antriebsmotors 22 um die Drehachse 21 drehbar und zusätzlich in Richtung des Doppelpfeils 23 mittels eines nicht dargestellten Antriebs in Richtung der Längsachse 21 heb- und senkbar. Die zwei ersten Teilelemente 15 sind in gleichmäßigen Winkelabständen zueinander angeordnet, im dargestellten Ausführungsbeispiel somit um 180° zueinander versetzt.

Auf der dem Oberteil 12 des Formwerkzeugs 11 seitlich gegenüberliegenden Seite des Trägers 19, das heißt außerhalb des Oberteils 12, ist eine Einrichtung 25 zum Zuführen von Etiketten 6 auf die Seitenwände 4 der Becher 1 angedeutet dargestellt. Mittels der Einrichtung 25, die an sich bekannt und daher nicht näher erläutert wird, lassen sich Etiketten 6 bereitstellen, rollen, und in die Durchgangsöffnungen 17 des ersten Teilelements 15 einführen und darin an den Wänden der Durchgangsöffnungen 17 positionieren.

Wie insbesondere aus einer Zusammenschau der Fig. 1 und 2 erkennbar ist, weist das erste Teilelement 15 drei vorzugsweise in gleichen Abständen nebeneinander angeordnete Durchgangsöffnungen 17 auf, deren Längsachsen parallel zur Drehachse 21 verlaufen. Weiterhin kann es vorgesehen sein, dass parallel zur Zeichenebene der Fig. 1 weitere Gruppen von jeweils drei Durchgangsöffnungen 17 vorgesehen sind, so dass in die Folienbahn 2, je nach Anzahl der Durchgangsöffnungen 17, gleichzeitig jeweils ein Vielfaches von drei Bechern 1 eingeformt werden können. Die Durchgangsöffnungen 17 sind als Durchgangsöffnungen 17 mit geraden Seitenwänden, das heißt ohne Einführschrägen, ausgebildet. Im dargestellten Ausführungsbeispiel weisen sie über die gesamte Höhe h des ersten Teilelements 15 einen runden Querschnitt mit dem Durchmesser d auf. Alternativ ist es jedoch auch denkbar, dass die Durchgangsöffnungen 17 beispielsweise einen rechteckförmigen bzw. einen quadratischen Querschnitt, insbesondere mit gerundeten Kanten, aufweisen.

Die Durchgangsöffnungen 17 in einem ersten Teilelement 15 wirken mit stempelartigen Fortsätzen 28 eines zweiten Teilelements 30 der Tiefziehform 13 zusammen. Die Anordnung der Fortsätze 28 ist dabei der Anordnung der Durchgangsöffnungen 17 in dem ersten Teilelement 15 angepasst. Wie insbesondere anhand der Fig. 2 erkennbar ist, sind die Fortsätze 28 auf der dem Oberteil 12 abgewandten Stirnseite des ersten Teilelements 15 in die Durchgangsöffnungen 17 des ersten Teilelements 15 einführbar. Hierzu sind die Fortsätze 28 auf einer in der Fig. 1 erkennbaren Bodenplatte 31 angeordnet, die über einen Spindelantrieb mit einer Spindel 32 mit einem zweiten Antriebsmotor 33 gekoppelt ist. Mittels des zweiten Antriebsmotors 33 lassen sich die Fortsätze 28 axial in die Durchgangsöffnungen 17 einführen, wobei der Querschnitt der Fortsätze 28 dem Querschnitt der Durchgangsöffnungen 17 derart angepasst ist, dass zwischen dem Außenumfang der Fortsätze 28 und der Umfangswand 34 der Durchgangsöffnung 17 lediglich ein geringer (radialer) Spalt ausgebildet ist, der erforderlich ist, um die Fortsätze 28 ohne allzu viel Reibung in die Durchgangsöffnungen 17 einführen zu können.

Die dem Oberteil 12 zugewandte Stirnfläche eines Fortsatzes 28 bildet eine Grundfläche 35 aus, die beim Thermoformen den Bodenbereich 5 des Bechers 1 ausbildet. Demgegenüber dient die Umfangswand 34 in der Durchgangsöffnung 17 zum Ausbilden der Seitenwand 4 an dem Becher 1. Wie anhand der Fig. 2 besonders deutlich erkennbar ist, ist der Fortsatz 28 zumindest bis in zwei durch die Höhenlinien 36 und 37 gekennzeichnete Stellungen in die Durchgangsöffnung 17 einführbar. In der unteren Stellung (Höhenline 36) können Becher 1 mittels der Thermoformeinrichtung 10 geformt werden, deren Becherhöhe größer ist als bei einer Stellung des Fortsatzes 28 in der Höhenline 37. Die beiden Höhenlinien 36 und 37 stellen somit die beiden axialen Extremstellungen des Fortsatzes 28 in der Durchgangsöffnung 17 zum Herstellen eines Bechers 1 mit einer minimalen bzw. einer maximalen Becherhöhe dar. Zusätzlich ist noch eine Höhenline 38 eingezeichnet, die eine Stellung des Fortsatzes 28 kennzeichnet, die sich axial noch weiter in der Durchgangsöffnung 17 befindet als die Höhenline 37. In dieser Stellung des Fortsatzes 28 lässt sich der Becher 1 aus dem Formwerkzeug 1 entformen. Das Entformen der Becher 1 aus dem Formwerkzeug 11 bzw. das Einführen der Fortsätze 28 in die Durchgangsöffnungen 17 des ersten Teilelements 15 erfolgt durch Absenken des ersten Teilelements 15 in Richtung des Pfeils 39, oder aber durch zusätzliches Anheben der Fortsätze 28 mittels des zweiten Antriebsmotors 33.

Um nach dem Einformen der Becher 1 in die Folienbahn 2 die Becher 1 möglichst schnell aus der Tiefziehform 13 entformen zu können ist es vorgesehen, dass zumindest die Fortsätze 28 im Bereich der Grundfläche 35 gekühlt ausgebildet sind.

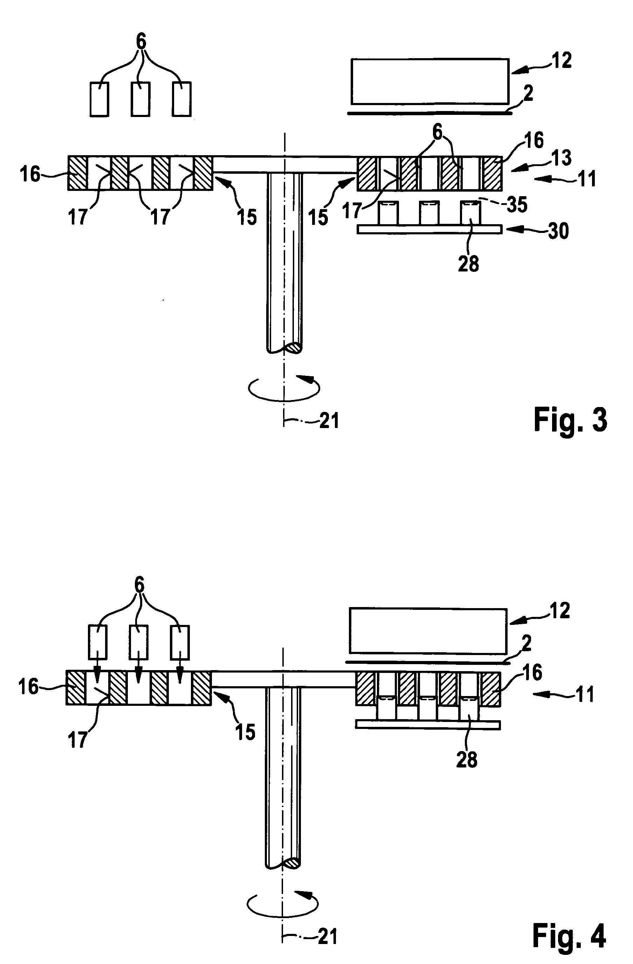

Die soweit beschriebene Thermoformeinrichtung 10 arbeitet wie folgt, wobei nachfolgend auf die Fig. 3 bis 5 Bezug genommen wird: In der in der Fig. 3 dargestellten Stellung der Thermoformeinrichtung 10 sind die einen Durchgangsöffnungen 17 des einen ersten Teilelements 15 mit den bereits darin angeordneten Etiketten 6 in Ausrichtung mit den Fortsätzen 28 des zweiten Teilelements 30 ausgerichtet. Weiterhin befindet sich das eine erste Teilelement 15 in einer zum Oberteil 12 axial beabstandeten Position. Etiketten 6 sind in Höhe des Oberteils 12 zum Einführen in die Durchgangsöffnungen 17 des anderen ersten Teilelements 15 mittels der Einrichtung 25 bereitgestellt.

In der Fig. 4 ist eine angehobene Position der ersten Teilelemente 15 dargestellt, bei der sich die Durchgangsöffnungen 17 des einen ersten Teilelements 15 unmittelbar unterhalb der (erwärmten) Folienbahn 2 befinden. Weiterhin sind die Fortsätze 28 mittels des zweiten Antriebsmotors 33 in eine angehobene Position in die Durchgangsöffnungen 17 eingeführt, die erforderlich ist, um Becher 1 mit einer definierten Höhe auszubilden. Man erkennt weiterhin, dass durch die im Zusammenhang mit der Fig. 1 erläuterten Auslässe 14 ein Überdruck unmittelbar auf die erwärmte Folienbahn 2 einwirken kann. Gleichzeitig werden die an dem anderen ersten Teilelement 15 bereitgestellte Etiketten 6 in die Durchgangsöffnungen 17 eingeführt.

In der in der Fig. 5 dargestellten Position der Thermoformeinrichtung 10 sind die Becher 1 bereits aus dem einen ersten Teilelement 15 entformt worden und die Fortsätze 28 bereits wieder außerhalb der Durchgangsöffnungen 17 positioniert. In dieser Stellung kann die Tiefziehform 13 um die Drehachse 21 um 180° verschwenkt werden, so dass das andere erste Teilelement 15 mit den zwischenzeitlich in den Durchgangsöffnungen 17 positionierten Etiketten 6 mit den Fortsätzen 28 ausgerichtet werden kann. Weiterhin muss die Folienbahn 2 senkrecht zur Zeichenebene der Fig. 3 bis 5 um einen bestimmten Vorschub weitergefördert werden, um den nächsten Folienbahnabschnitt in die Durchgangsöffnungen 17 des anderen ersten Teilelements 15 einformen zu können.

Die soweit beschriebene Thermoformeinrichtung 10 kann in vielfältiger Art und Weise abgewandelt bzw. modifiziert werden, ohne vom Erfindungsgedanken abzuweichen. So ist es beispielsweise denkbar, die Durchgangsöffnungen 17 mit einem derartigen Querschnitt auszubilden, dass lediglich in dem Teilbereich, in den die Fortsätze 28 in die Durchgangsöffnungen 17 eintauchen können, der Querschnitt der Durchgangsöffnungen 17 ohne Einführschrägen ausgebildet ist, während der Bereich oberhalb davon, das heißt in Richtung zum Oberteil 12 hin, die Durchgangsöffnungen 17 einen mehr oder minder beliebigen oder anderen Querschnitt mit Einführschrägen aufweisen können. Darüber hinaus ist es auch denkbar, die beiden ersten Teilelemente 15 nicht verschwenkbar, sondern beispielsweise (linear) verschiebbar anzuordnen. Wesentlich ist lediglich, dass zum Zuführen der Etiketten 6 das eine Teilelement in eine Position außerhalb des Oberteils 12 bzw. der Folienbahn 2 verbracht werden kann.

## Patentansprüche

1. Thermoformeinrichtung (10), insbesondere für mit einem Lebensmittel befüllbare Becher (1), mit einem Formwerkzeug (11), bestehend aus einem Oberteil (12) und einer unterhalb des Oberteils (12) angeordneten Tiefziehform (13) zum Einformen wenigstens eines Bechers (1) in eine erwärmte Folienbahn (2), wobei die Tiefziehform (13) eine Seitenwand (4) und einen Bodenbereich (5) an dem wenigstens einen Becher (1) ausbildet, wobei das Einformen des Bechers (1) in die Tiefziehform (13) durch Erzeugen eines Überdrucks auf die Folienbahn (2) in Richtung der Tiefziehform (13) erfolgt, wobei die Tiefziehform (13) wenigstens ein erstes Teilelement (15) mit einer Durchgangsöffnung (17) zum Formen der Seitenwand (4) und ein von dem wenigstens einen ersten Teilelement (15) als separates Bauteil ausgebildetes zweites Teilelement (30) zum Formen des Bodenbereichs (5) umfasst, wobei die beiden Teilelemente (15, 30) relativ zueinander beweglich angeordnet sind, derart, dass das zweite Teilelement (30) bereichsweise in die dem zweiten Teilelement (30) zugewandte Stirnseite der Durchgangsöffnung (17) des ersten Teilelements (15) einführbar ist, und wobei eine den Bodenbereich (5) des Bechers (1) ausbildende Grundfläche (35) des zweiten Teilelements (30) dem Querschnitt der Durchgangsöffnung (17) im ersten Teilelement (15) derart angepasst ist, dass die Grundfläche (35) zur Ausbildung unterschiedlicher Behälterhöhen in verschiedene Höhen (36, 37) der Durchgangsöffnung (17) positionierbar ist, derart, dass die Grundfläche (35) des zweiten Teilelements (30) zur Umfangswand (34) der Durchgangsöffnung (17) des ersten Teilelements (15) umfangsseitig mit geringem Abstand angeordnet ist.
**dadurch gekennzeichnet,**
**dass** die Tiefziehform (13) aus wenigstens zwei ersten Teilelementen (15) und aus einem zweiten Teilelement (30) besteht, und dass die wenigstens zwei ersten Teilelemente (15) in eine Position verstellbar angeordnet sind, in der diese außer Deckung außerhalb des Oberteils (12) und dem zweiten Teilelement (30) angeordnet sind, wobei das zweite Teilelement (15) stets ortsfest in Überdeckung mit dem Oberteil (12) angeordnet ist.

2. Thermoformeinrichtung nach Anspruch 1,
**dadurch gekennzeichnet,**
**dass** eine Einrichtung (25) zum Zuführen von Etiketten (6) in die Durchgangsöffnung (17) des ersten Teilelements (15) vorgesehen ist, und dass die Einrichtung (25) in Wirkverbindung mit einem ersten Teilelement (15) angeordnet ist, wenn ein anderes erstes Teilelement (15) in Wirkverbindung mit dem zweiten Teilelement (30) angeordnet ist.

3. Thermoformeinrichtung nach Anspruch 1 oder 2,
**dadurch gekennzeichnet,**
**dass** die Tiefziehform (13) zwei erste Teilelemente (15) umfasst, die an einem säulenartigen Träger (19) um eine Achse (21) drehbar angeordnet sind, und dass die zwei ersten Teilelemente (15) um 180° zueinander angeordnet sind.

4. Thermoformeinrichtung nach einem der Ansprüche 1 bis 3,
**dadurch gekennzeichnet,**
**dass** der Antrieb des zweiten Teilelements (30) mittels eines Hubspindelantriebs (32, 33) erfolgt.

5. Thermoformeinrichtung nach einem der Ansprüche 1 bis 4,
**dadurch gekennzeichnet,**
**dass** das erste Teilelement (15) zusätzlich höhenverstellbar angeordnet ist.

6. Thermoformeinrichtung nach einem der Ansprüche 1 bis 5,
**dadurch gekennzeichnet,**
**dass** zum Entformen der Becher (1) aus dem ersten Teilelement (15) das zweite Teilelement (30) mit seiner Grundfläche (35) über die Position zum Einformen des Bodenbereichs (5) hinaus in Richtung des Oberteils (12) in das erste Teilelement (15) einfahrbar ist.

7. Thermoformeinrichtung nach einem der Ansprüche 1 bis 6,
**dadurch gekennzeichnet,**
**dass** ein erstes Element (15) mehrere Durchgangsöffnungen (17) aufweist, dass das zweite Teilelement (30) für jede Durchgangsöffnung (17) einen, die Grundfläche (35) ausbildenden stempelartigen Fortsatz (28) aufweist, und dass die Fortsätze (28) auf einer gemeinsamen Bodenplatte (31) angeordnet sind.

8. Thermoformeinrichtung nach einem der Ansprüche 1 bis 7,
**dadurch gekennzeichnet,**
**dass** die Umfangswand (34) der Durchgangsöffnung (17) im ersten Teilelement (15) zumindest im Einführbereich des zweiten Teilelements (30) in das erste Teilelement (15) sowie das zweite Teilelement (30) im entsprechenden Bereich jeweils mit geraden Seitenwänden, das heißt ohne Einführschrägen, ausgebildet ist.

9. Thermoformeinrichtung nach Anspruch 6,
**dadurch gekennzeichnet,**
**dass** der Querschnitt der Durchgangsöffnung (17) im ersten Teilelement (15) über dessen gesamte Höhe (h) mit geraden Seitenwänden, das heißt ohne Einführschrägen, ausgebildet ist.

10. Thermoformeinrichtung nach einem der Ansprüche 6 bis 9,
**dadurch gekennzeichnet,**
**dass** zumindest die Grundfläche (35) des zweiten Teilelements (30) als gekühlte Grundfläche (35) ausgebildet ist.

## Claims

1. Thermoforming device (10), in particular for cups (1) that can be filled with a foodstuff, having a molding tool (11), consisting of an upper part (12) and a deep-drawing mold (13), arranged underneath the upper part (12), for molding at least one cup (1) into a heated sheet of film (2), the deep-drawing mold (13) forming a side wall (4) and a bottom region (5) on the at least one cup (1), the molding of the cup (1) into the deep-drawing mold (13) taking place by producing a positive pressure on the sheet of film (2) in the direction of the deep-drawing mold (13), the deep-drawing mold (13) comprising at least one first part-element (15), with a through-opening (17) for molding the side wall (4), and a second part-element (30), formed as a component that is separate from the at least one first part-element (15), for molding the bottom region (5), the two part-elements (15, 30) being arranged such that they are movable in relation to one another in such a way that the second part-element (30) can in certain regions be introduced into the end face of the through-opening (17) of the first part-element (15) that is facing the second part-element (30), and a base area (35) of the second part-element (30) that forms the bottom region (5) of the cup (1) being adapted to the cross section of the through-opening (17) in the first part-element (15) in such a way that, to form different container heights, the base area (35) can be positioned to different heights (36, 37) of the through-opening (17) in such a way.that the base area (35) of the second part-element (30) is arranged circumferentially at a small distance from the circumferential wall (34) of the through-opening (17) of the first part-element (15),
**characterized**
**in that** the deep-drawing mold (13) consists of at least two first part-elements (15) and a second part-element (30), and in that the at least two first part-elements (15) are arranged such that they can be adjusted into a position in which they are arranged out of alignment outside the upper part (12) and the second part-element (30), the second part-element (15) always being arranged such that it is fixed in congruence with the upper part (12).

2. Thermoforming device according to Claim 1,
**characterized**
**in that** a device (25) for feeding labels (6) into the through-opening (17) of the first part-element (15) is provided, and in that the device (25) is arranged in operative connection with one first part-element (15) when another first part-element (15) is arranged in operative connection with the second part-element (30) .

3. Thermoforming device according to Claim 1 or 2,
**characterized**
**in that** the deep-drawing mold (13) comprises two first part-elements (15), which are arranged rotatably about an axis (21) on a columnar carrier (19), and in that the two first part-elements (15) are arranged at 180 ° in relation to one another.

4. Thermoforming device according to one of Claims 1 to 3,
**characterized**
**in that** the drive of the second part-element (30) takes place by means of a lifting spindle drive (32, 33).

5. Thermoforming device according to one of Claims 1 to 4,
**characterized**
**in that** the first part-element (15) is additionally arranged such that it is height-adjustable.

6. Thermoforming device according to one of Claims 1 to 5,
**characterized**
**in that**, for the demolding of the cups (1) from the first part-element (15), the second part-element (30) can be moved with its base area (35) into the first part-element (15) in the direction of the upper part (12) beyond the position for molding the bottom region (5) .

7. Thermoforming device according to one of Claims 1 to 6,
**characterized**
**in that** a first element (15) has multiple through-openings (17), in that the second part-element (30) has for each through-opening (17) a punch-like continuation (28), forming the base area (35), and in that the continuations (28) are arranged on a common baseplate (31).

8. Thermoforming device according to one of Claims 1 to 7,
**characterized**
**in that** the circumferential wall (34) of the through-opening (17) in the first part-element (15), at least in the region where the second part-element (30) is led into the first part-element (15), and the second part-element (30) in the corresponding region is respectively formed with straight side walls, that is to say without lead-in chamfers.

9. Thermoforming device according to Claim 6,
**characterized**
**in that** the cross section of the through-opening (17) in the first part-element (15) is formed with straight side walls, that is to say without lead-in chamfers, over its entire height (h).

10. Thermoforming device according to one of Claims 6 to 9,
**characterized**
**in that** at least the base area (35) of the second part-element (30) is formed as a cooled base area (35).

## Revendications

1. Appareil de thermoformage (10), en particulier pour un godet (1) destiné à contenir un aliment, avec un outil de formage (11), se composant d'une partie supérieure (12) et d'un moule d'emboutissage (13) disposé en dessous de la partie supérieure (12) pour le formage d'au moins un godet (1) dans une bande de feuille chauffée (2), dans lequel le moule d'emboutissage (13) forme une paroi latérale (4) et une région de fond (5) sur ledit au moins un godet (1), dans lequel le formage du godet (1) dans le moule d'emboutissage (13) est effectué en produisant une surpression sur la bande de feuille (2) en direction du moule d'emboutissage (13), dans lequel le moule d'emboutissage (13) comprend un premier élément partiel (15) avec une ouverture de passage (17) pour le formage de la paroi latérale (4) et un deuxième élément partiel (30) réalisé comme composant distinct dudit au moins un premier élément partiel (15) pour le formage de la région de fond (5), dans lequel les deux éléments partiels (15, 30) sont agencés de façon mobile l'un par rapport à l'autre, de telle manière que le deuxième élément partiel (30) puisse être introduit localement dans le côté frontal de l'ouverture de passage (17) du premier élément partiel (15) tournée vers le deuxième élément partiel (30), et dans lequel une face de base (35) du deuxième élément partiel (30) formant la région de fond (5) du godet (1) est adaptée à la section transversale de l'ouverture de passage (17) dans le premier élément partiel (15), de telle manière que la face de base (35) puisse être positionnée à différentes hauteurs (36, 37) de l'ouverture de passage (17) pour la formation de différentes hauteurs de récipient, de telle manière que la face de base (35) du deuxième élément partiel (30) soit agencée en périphérie à faible distance de la paroi périphérique (34) de l'ouverture de passage (17) du premier élément partiel (15),
**caractérisé en ce que** le moule d'emboutissage (13) se compose d'au moins deux premiers éléments partiels (15) et d'un deuxième élément partiel (30), et **en ce que** lesdits au moins deux premiers éléments partiels (15) sont agencés de façon réglable dans une position, dans laquelle ceux-ci, en plus du recouvrement, sont agencés à l'extérieur de la partie supérieure (12) et du deuxième élément partiel (30), dans lequel le deuxième élément partiel (15) est toujours agencé de façon stationnaire en recouvrement avec la partie supérieure (12).

2. Appareil de thermoformage selon la revendication 1, **caractérisé en ce qu'**il est prévu un appareil (25) pour amener des étiquettes (6) dans l'ouverture de passage (17) du premier élément partiel (15), et **en ce que** l'appareil (25) est agencé en liaison active avec le premier élément partiel (15), lorsqu'un autre premier élément partiel (15) est agencé en liaison active avec le deuxième élément partiel (30).

3. Appareil de thermoformage selon la revendication 1 ou 2, **caractérisé en ce que** le moule d'emboutissage (13) comprend deux premiers éléments partiels (15), qui sont agencés sur un support en forme de tour (19) de façon rotative autour d'un axe (21), et **en ce que** les deux premiers éléments partiels (15) sont agencés à 180° l'un de l'autre.

4. Appareil de thermoformage selon l'une quelconque des revendications 1 à 3, **caractérisé en ce que** l'entraînement du deuxième élément partiel (30) est assuré au moyen d'un entraînement à vis de montée (32, 33).

5. Appareil de thermoformage selon l'une quelconque des revendications 1 à 4, **caractérisé en ce que** le premier élément partiel (15) est en outre réglable en hauteur.

6. Appareil de thermoformage selon l'une quelconque des revendications 1 à 5, **caractérisé en ce que**, pour le démoulage des godets (1) hors du premier élément partiel (15), le deuxième élément partiel (30) peut être introduit dans le premier élément partiel (15) en direction de la partie supérieure (12) avec sa face de base (35) au-delà de la position pour démouler la région de fond (5).

7. Appareil de thermoformage selon l'une quelconque des revendications 1 à 6, **caractérisé en ce qu'**un premier élément (15) présente plusieurs ouvertures de passage (17), **en ce que** le deuxième élément partiel (30) présente pour chaque ouverture de passage (17) un prolongement en forme de poinçon (28) formant la face de base (35), et **en ce que** les prolongements (28) sont agencés sur une plaque de base commune (31).

8. Appareil de thermoformage selon l'une quelconque des revendications 1 à 7, **caractérisé en ce que** la paroi périphérique (34) de l'ouverture de passage (17) dans le premier élément partiel (15) au moins dans la région d'introduction du deuxième élément partiel (30) dans le premier élément partiel (15) ainsi que le deuxième élément partiel (30) dans la région correspondante sont respectivement formés avec des parois latérales rectilignes, c'est-à-dire sans chanfreins d'introduction.

9. Appareil de thermoformage selon la revendication 6, **caractérisé en ce que** la section transversale de l'ouverture de passage (17) dans le premier élément partiel (15) est formée sur toute sa hauteur (h) avec des parois latérales rectilignes, c'est-à-dire sans chanfreins d'introduction.

10. Appareil de thermoformage selon l'une quelconque des revendications 6 à 9, **caractérisé en ce qu'**au moins la face de base (35) du deuxième élément partiel (30) est réalisée sous la forme d'une face de base refroidie (35).
